# EUROPEAN PATENT APPLICATION

(11) **EP 3 819 603 A1**
(43) Date of publication of application: **12.05.2021**
(21) Application number: 20205096.9
(22) Date of filing: 02.11.2020
(51) Int. Cl.: G01F 23/00, G08C 17/02, H04Q 9/00

(54) **FUEL DISPENSING ENVIRONMENT HAVING WIRELESS SENSING ARRANGEMENT**

(30) Priority: 07.11.2019 US 201916677097
(71) Applicant: Veeder-Root Company, Simsbury, CT 06070 (US)
(72) Inventor: Schneider, John, Springfield, MA Massachusetts 01089 (US); Berrio, Gaston, Avon, 06001 (US)
(74) Representative: Gray, James

(57) **Abstract**

An underground sensing arrangement for use in a fueling environment comprises at least one sensor located under a ground surface and a power supply. The sensor is operative to detect a condition in the fueling environment. A wireless transceiver is in electrical communication with the at least one sensor and the power supply. The wireless transceiver has an environmental housing and electrical circuitry contained within the environmental housing. The electrical circuitry includes control circuitry, radio circuitry, and an antenna. The environmental housing is substantially transparent to electromagnetic frequencies at which the wireless transceiver operates and is potted substantially flush with the ground surface.

## Description

### BACKGROUND

The present invention relates generally to equipment used in fuel dispensing environments. More specifically, the present invention relates to a fuel dispensing environment in which data from underground sensors is supplied wirelessly.

As is well known, liquid fuel delivery systems typically include one or more fuel dispensers located in the forecourt area of a service station. The fuel dispensers are connected via piping with a source of the liquid fuel (e.g., a tank containing gasoline). Typically, the piping is located under the forecourt so as to feed the liquid fuel from an underground storage tank (UST). Multiple USTs may be provided for different types or grades of fuel. Fuel grades can be mixed as necessary or desired to yield still further grades of fuel.

The USTs are typically equipped with a probe (e.g., a magnetostrictive probe) that measures the level of the fluid within the storage tank. Additionally, the probe may measure temperature, pressure, and other environmental factors that may be used in determining the volume of fluid within the storage tank. These factors are then reported to a tank monitor or site controller to determine if the tank is leaking and for inventory reconciliation.

Such probes typically report the factors and parameters through an electromagnetic signal sent over a wire-based system. These wire-based systems, however, generally must be routed through an intrinsically safe conduit. Intrinsically safe conduits are expensive and difficult to install. Another concern with conventional systems is that the communication wires must run from the underground storage tank to the tank monitor, which is usually located in the central building of the fueling environment. These communication wires are typically run underneath the concrete slab that forms the fueling environment's forecourt. If the communication wires are damaged or need to be replaced, the entire forecourt is disrupted as the concrete slab is broken, and the communication wires excavated. Thus, it is difficult to upgrade or repair existing systems without great expense and disruption to the ordinary course of business for the fueling environment.

In addition to the tank level probes, sumps associated with the piping system often have leak detection sensors. For example, the sumps may be positioned underneath the fuel dispensers, at low points in the piping system, or other locations as needed. The wiring for the sump sensor is also usually run underneath the concrete slab of the forecourt, and raises the same issues discussed above.

Moreover, in various emerging markets, service stations have limited finances to install automated inventory management systems. Installing wireless, battery powered sensors would be ideal. However, because these sensors are usually installed underground, this can significantly impact the range of a wireless signal (especially at common networking frequencies in the GHZ region such as 2.4 GHz and 5 GHz). Various attempts to provide an effective wireless solution in similar circumstances have been proposed. For example, U.S. Pat. No. 7,561,040, incorporated fully herein by reference for all purposes, discloses a wireless probe system using repeaters for the wireless signal.

### SUMMARY

The present invention recognizes and addresses various considerations of prior art constructions and methods. According to one embodiment, the present invention provides an underground sensing arrangement for use in a fueling environment. The arrangement comprises at least one sensor located under a ground surface and a power supply. The sensor is operative to detect a condition in the fueling environment. A wireless transceiver is in electrical communication with the at least one sensor and the power supply. The wireless transceiver has an environmental housing and electrical circuitry contained within the environmental housing. The electrical circuitry includes control circuitry, radio circuitry, and an antenna. The environmental housing is substantially transparent to electromagnetic frequencies at which the wireless transceiver operates and may be potted substantially flush with the ground surface.

In exemplary embodiments, the sensor may located at least in part in a sump in the fueling environment. For example, the sensor may be associated with a level probe inserted into an underground storage tank. Alternatively, or in addition, the sensor may comprise a liquid detector such as a liquid detector operative to detect the presence of water in the sump.

In exemplary embodiments, the power source may comprise a battery device located in the sump. The wireless transceiver may be mounted to a cover of the sump or may be mounted in a hole defined in the ground surface. In some exemplary embodiments, the wireless transceiver may be configured as a Bluetooth transceiver, a WiFi transceiver, or a transceiver operating according to another known networking protocol.

Another aspect of the present invention provides an underground sensing arrangement for use with liquid handling equipment located under a ground surface. The arrangement comprises at least one sensor located under the ground surface and a power supply. The sensor is operative to detect a condition in the liquid handling equipment. A wireless transceiver is in electrical communication with the at least one sensor and the power supply. The wireless transceiver has an environmental housing and electrical circuitry contained within the environmental housing. The electrical circuitry includes control circuitry, radio circuitry, and an antenna. The environmental housing is substantially transparent to electromagnetic frequencies at which the wireless transceiver operates and is mounted in a hole defined in the ground surface.

A still further aspect of the present invention provides a method of sensing a condition in a fueling environment using a sensor located under a ground surface. One step of the method involves mounting a battery device under the ground surface. A wireless transceiver is potted substantially flush with the ground surface. The wireless transceiver is connected so as to be in electrical communication with the sensor and the battery device. According to another step, the wireless transceiver is caused to operate in a low power mode while awaiting a wake-up commend. According to another step, the wake-up command is received at the wireless transceiver. In response to the wake-up command, a reading is obtained from the sensor. The reading that was obtained from the sensor is transmitted via the wireless transceiver.

Another aspect of the present invention provides a method of sensing a condition in a fueling environment using a sensor located under a ground surface. One step of the method involves mounting a battery device under the ground surface. A wireless transceiver is potted substantially flush with the ground surface. The wireless transceiver is connected so as to be in electrical communication with the sensor and the battery device. According to another step, the wireless transceiver is caused to operate in a low power mode until a wake-up time is reached. When the wake-up time is reached, a reading is obtained from the sensor. The reading that was obtained from the sensor is transmitted via the wireless transceiver.

Those skilled in the art will appreciate the scope of the present invention and realize additional aspects thereof after reading the following detailed description of preferred embodiments in association with the accompanying drawing figures.

### BRIEF DESCRIPTION OF THE DRAWINGS

A full and enabling disclosure of the present invention, including the best mode thereof directed to one skilled in the art, is set forth in the specification, which makes reference to the appended drawings, in which:
Figure 1 is a diagrammatic representation of a sensing arrangement constructed in accordance with the present invention used in conjunction with a level probe in an underground storage tank.
Figure 2 is a diagrammatic representation of a sensing arrangement constructed in accordance with the present invention used in conjunction with a sump liquid detector.
Figure 3 is a diagrammatic representation of a wireless transceiver such as may be used in the arrangements of Figures 1 and 2 installed in the ground.
Figure 4 is a diagrammatic representation of a transceiver board that may be used in the wireless transceiver of Figure 3.
Figure 5 is a flowchart showing certain aspects of the operation of the wireless transceiver of Figure 3 in accordance with a preferred embodiment.

Repeat use of reference characters in the present specification and drawings is intended to represent same or analogous features or elements of the invention.

### DETAILED DESCRIPTION OF PREFERRED EMBODIMENTS

Reference will now be made in detail to presently preferred embodiments of the invention, one or more examples of which are illustrated in the accompanying drawings. Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the present disclosure including the appended claims and their equivalents.

The present invention provides an arrangement in which data from underground sensors can be interrogated wirelessly in an effective manner. Because fueling environment sumps are typically located in parking lots or areas with vehicle traffic, the sump covers are typically made of metal. If the antenna is located in the sump, the cover will significantly attenuate the wireless signal (particularly at the GHz frequencies typically used for this purpose). There have been some previous proposals to mount an antenna external to a manhole while the transmitter continues to be located inside the underground space. Placing the antenna outside the sump should allow for increased range since the antenna has less material through which to transmit to reach the receiver.

A problem with this arrangement is that in order to use Bluetooth technology (for example), without the expense of recertifying the electrical hardware, the physical layout of the Bluetooth chip, support components, and on-board printed circuit board (PCB) must be duplicated from the chip manufacturer's preferred configuration. Because this technology is often used in mobile devices, the physical dimensions are usually kept compact with the antenna in close proximity to the chip. Thus, moving only the wireless antenna externally to the sump would require significant design and certification expense in a fueling environment. Alternatively, small transceiver circuitry (e.g., Bluetooth) can be separated from the power source (e.g., battery device) and installed external to the sump.

As one skilled in the art will appreciate, a fueling environment may typically include a central building adjacent to or surrounded by a forecourt region in which a number of fuel dispensers are located. This central building may house a convenience store, a quick serve restaurant, a service garage, or the like. While such central buildings are "central" in the sense that they are the focal point of the fueling environment, they need not be positioned in the "center" of the fueling environment. The fuel dispensers provide fuel to consumers through hoses and nozzles, as is well understood. The fuel provided to the consumers is typically stored in one or more underground storage tanks (USTs). The USTs contain fuel that is delivered to the fuel dispensers (e.g., using a submersible turbine pump) through a piping network that runs under the forecourt.

A site controller may be positioned in the central building and has a communication link that communicates with a remote network, such as the Internet, for example. A wireless transceiver may be associated with the site controller (or a separate tank monitor that itself communicates with the site controller) to receive readings from various underground sensors located in the forecourt, such as level detectors and/or leak detectors.

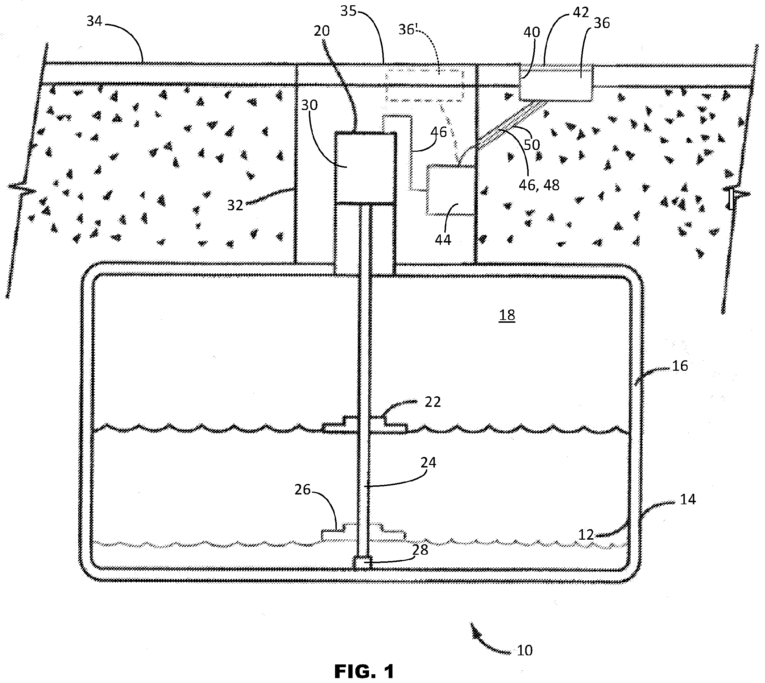

Figure 1 illustrates a UST 10, which is preferably a double-walled UST with inner wall 12 and outer wall 14 forming an interstitial space 16 therebetween. The interstitial space 16 may contain leaks, as is well understood. The inner wall 12 delimits an interior chamber 18 in which fuel is stored. A tank probe 20 measures the level of fuel within the interior chamber 18. In an exemplary embodiment, the tank probe 20 comprises a magnetostrictive probe that measures the level of the fuel using a fuel level float 22 that moves up and down along a probe shaft 24. Tank probe 20 may also have a water level float 26 that determines the level of water at the bottom of the tank so that pumping can be suspended if the water level is too high. A foot 28 may be mounted at the bottom of probe shaft 24 so that the probe shaft will rest on the inside floor of the UST.

Tank probe 20 may be the Mag Plus leak detection probe or similar device sold by Veeder-Root Company. As one skilled in the art will appreciate, such probes use magnetostrictive principles to determine the levels of the floats. These probes may also include various other sensors to detect leaks or other conditions within the fueling environment as needed or desired. Exemplary conditions include, but are not limited to: vapor pressure, temperature, the presence or absence of fluid, the presence or absence of hydrocarbons, the presence or absence of oxygen or other atmospheric component, environmental factors, and the like.

The head 30 of tank probe 20 includes electrical circuitry to receive and send data collected by the various sensors. As shown, head 30 is positioned within a fill sump 32.

Fill sumps, such as sump 32, are designed to allow the UST 10 to be refilled, and are thus positioned beneath a forecourt concrete slab 34. A manhole cover 35 (generally made of metal) is typically positioned over sump 32. To refill the UST 10, cover 35 is removed, and flexible pipes from the tanker are extended through the fill sump 32 into the interior chamber 18. Alternatively, tank probe 20 may be positioned within a sump designed to hold a submersible turbine pump (STP), such as the STP disclosed in U.S. Pat. No. 6,223,765 (which is hereby incorporated by reference in its entirety for all purposes).

Tank probe 20 is associated with a wireless transceiver 36 constructed in accordance with the present invention. For example, tank probe 20 may be connected to transceiver 36 via a conventional probe cable, such as an RS-485 cable, or other suitable wiring. In this regard, transceiver 36 receives standard probe signals relating to measurements by tank probe 20 and formats the signals from tank probe 20 onto a carrier signal for transmission to the site controller, tank monitor, or other device. As can be seen, transceiver 36 is mounted external to sump 32 in a hole defined in the ground surface (including slab 34). Preferably, transceiver 36 includes an environmental housing that protects its internal circuitry from moisture and other environmental factors. In addition, transceiver 36 may be potted in hole 40, such as by a suitable potting material (concrete, asphalt, epoxy, etc.), as indicated at 42, with the potting material being flush with the surface of slab 34. The environmental housing and the potting material are preferably substantially transparent to radio frequency transmissions at the frequencies of interest.

In accordance with the present invention, circuitry of transceiver 36 is preferably separated from its power source. In other words, rather than separating the antenna from the circuitry, the antenna and other circuitry are maintained together. Instead, the power source is separated from the remainder of the transceiver. This allows transceiver 36 to be as compact as possible while allowing the power source to be more easily serviced (such as in the case where the power source comprises batteries). In addition, while transceiver 36 could be fitted into the sump, it is preferably located outside of the sump. Because the antenna of transceiver 36 is located outside of the sump, the structure of sump 32 and cover 35 does not interfere with its effective transmission. For example, as explained more fully below, certain embodiments may use circuitry typically used in mobile phones for the transceiver. This allows the entire transceiver 36, including the environmental housing, to be very small.

Toward this end, a battery device 44 containing one or more batteries as appropriate or desired is mounted in sump 32 at a convenient location. For example, battery device 44 may be mounted to the wall of sump 32 as shown. Signal line 46 extends from tank probe 20. This signal line, along with a power line 48, extends from battery device 44 to transceiver 36. For example, lines 46, 48 may pass through a conduit or other bore 50 extending between battery device 44 and transceiver 36.

In an alternative embodiment, a transceiver 36' may be mounted to (e.g., embedded in) the cover 35 itself rather than a hole 40. Preferably, the cover 35, or at least the portion surrounding transceiver 36', will preferably be substantially transparent to radio frequency transmissions at the frequencies of interest.

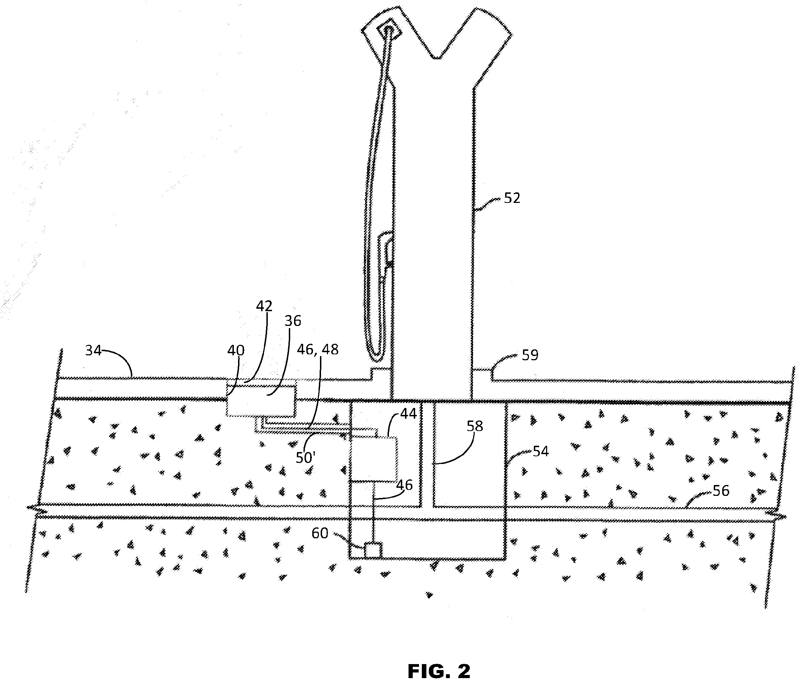

Figure 2 illustrates a fuel dispenser 52 associated with a fuel dispenser sump 54. The underground piping network 56 extends through the fuel dispenser sump 54, and a branch conduit 58 extends up into the fuel dispenser 52, as is well understood. In this case, the housing of fuel dispenser 52 is mounted with respect to a fueling island 59 surrounded by forecourt slab 34.

A sump probe 60 is positioned within the fuel dispenser sump 54 to detect liquid within the fuel dispenser sump 54. The sump probe 60 may be a Mag Sump Sensor sold by Veeder-Root Company, or other suitable probe. The sump probe 60 is connected to a wireless transceiver 36 via signal line 46, where the data is formatted onto a carrier signal and broadcast. Battery device 44 is mounted in sump 54 in a manner similar to that described in relation to Figure 1. Signal line 46 and power line 48 extend to transceiver 36 through a conduit or other bore 50' in this embodiment.

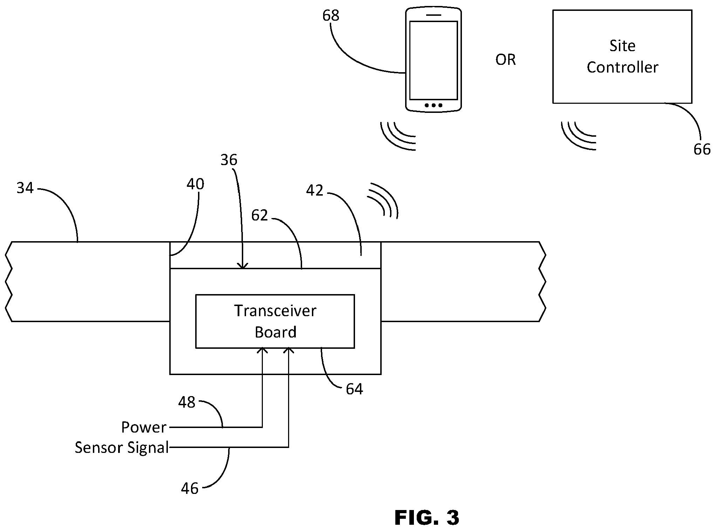

Referring now to Figure 3, certain additional aspects of transceiver 36 can be most easily explained. As noted above, transceiver 36 preferably includes an environmental housing 62 that protects the electrical circuitry of transceiver 36 from environmental factors such as moisture. In this case, the circuitry is embodied as a transceiver board 64. Various wireless technologies and protocols may be utilized, depending on the exigencies of the particular application. For example, conventional WiFi or WiFi direct technologies and protocols may be used, particularly if communication with a device in the central building is desired. In other embodiments, shorter range personal area network (PAN) technologies and protocols, such as Bluetooth or Zigbee, may be preferred. All of these options usually broadcast in the low Gigahertz (or at least high megahertz range). For example, some technologies and protocols that may be used will broadcast in at 2.4 GHz and/or 5 GHz.

Thus, Figure 3 illustrates options where transceiver 36 is communicating with a site controller 66 via conventional WiFi or with an operator's handheld device 68 using Bluetooth. A Bluetooth system may be especially preferred in emerging markets where there is less infrastructure. Rather than having the sensors feed into a central system for automatic inventory management and leak detection, the sensor can be activated and read using a handheld device carried by an operator. The handheld device can be a specifically designed device for this purpose, or can be a general purpose device (e.g., a smart phone) running a specific application ("app").

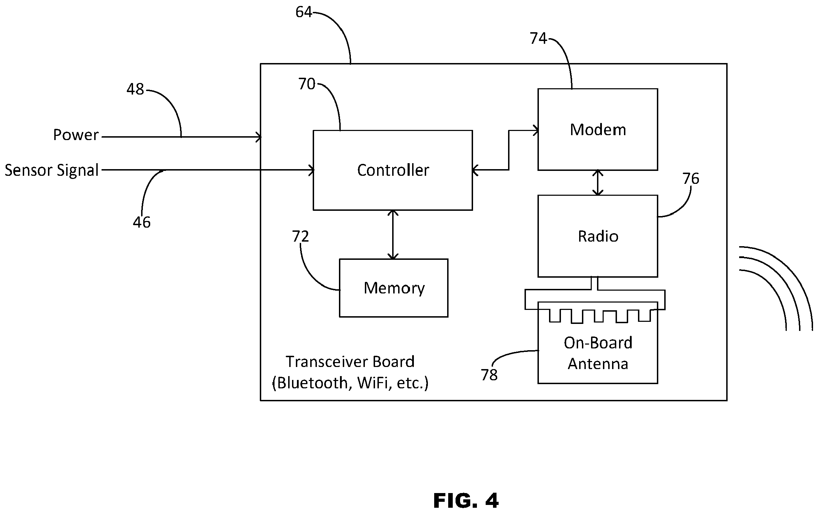

Additional details of transceiver board 64 can be explained with reference to Figure 4. A shown, board 64 includes a controller 70 that may be a suitable microprocessor. A memory 72, which may include volatile and nonvolatile sections as necessary or desired, is associated with controller 70. For example, memory 72 may store firmware for operation of controller 70 as well as providing a buffer for the sensor data that arrives via line 46. In any event, controller 70 coordinates the operation of the other components of board 64.

As shown, controller 70 is in communication with a modem 74 that modulates the sensor data into a form suitable for transmission and demodulates received signals into a form usable by controller 70. Modem 74 is in turn in communication with a radio 76 that includes suitable amplification and filtering circuitry for the frequencies of interest. Radio 76, along with antenna 78, sends and receives the radio frequency signals. As can be seen, antenna 78 may be in the form of a board-mounted chip that includes a suitable conductive trace forming the actual antenna. For example, board 64 may be an "off-the-shelf" miniature circuit board, such as those used in mobile telephones. As a result, transceiver 36 may be very small as described above. For example, board 64 may be approximately 0.5 inches by 2 inches in one preferred embodiment. The entire transceiver 36, including the environmental housing, would be a bit larger depending on what connections are used, etc. For example, transceiver 36 may be 1 inch by 1 inch by 3 inches or less in some exemplary embodiments.

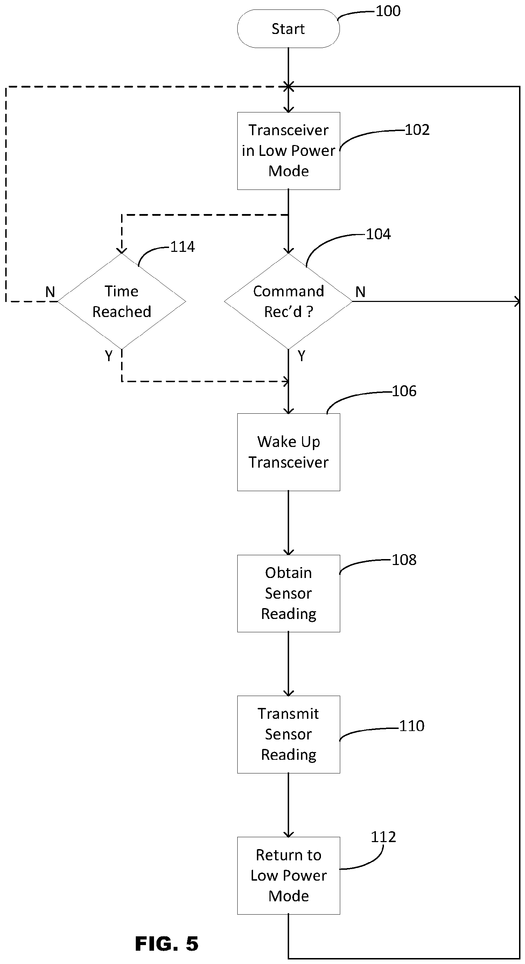

Figure 5 illustrates certain methodology by which transceiver 36 may operate. The process begins at 100 as shown. Initially, as indicated at 102, transceiver 36 may be in a low power ("sleep") mode in which only minimum functionality is occurring in order to reduce drain on battery device 44. The process then determines, as indicated at 104, if a command is received that would necessitate a wake up. If no such command is received, the process loops back. If such a command is received, however, the transceiver is taken out of low power mode (i.e., it wakes up), as indicated at 106. For example, mobile device 68 may have requested a reading from the associated sensor(s).

After the transceiver has woken up, a reading is obtained from the sensor(s), as indicated at 108. The transceiver then transmits the sensor reading (such as to the requesting device), as indicated at 110. Subsequently, the transceiver may return to low power mode, as indicated at 112.

Alternatively, or in addition, it may be desirable to have transceiver 36 transmit sensor data when a predetermined time since the last transmission has elapsed. This additional functionality is indicated at 114.

It can thus be seen that embodiments of the present invention provide a novel wireless sensing arrangement for use in a fueling environment. While one or more preferred embodiments of the invention have been described above, it should be understood that any and all equivalent realizations of the present invention are included within the scope and spirit thereof. The embodiments depicted are presented by way of example only and are not intended as limitations upon the present invention. Thus, it should be understood by those of ordinary skill in this art that the present invention is not limited to these embodiments since modifications can be made. Therefore, it is contemplated that any and all such embodiments are included in the present invention as may fall within the scope and spirit thereof.

## Claims

1. An underground sensing arrangement for use in a fueling environment, said arrangement comprising:
at least one sensor located under a ground surface, said sensor being operative to detect a condition in the fueling environment;
a power supply; and
a wireless transceiver in electrical communication with the at least one sensor and the power supply, the wireless transceiver having:
an environmental housing; and
electrical circuitry contained within the environmental housing, the electrical circuitry including control circuitry, radio circuitry, and an antenna;
wherein the environmental housing is substantially transparent to electromagnetic frequencies at which the wireless transceiver operates, the environmental housing being potted substantially flush with the ground surface.

2. An underground sensing arrangement as set forth in claim 1, wherein said at least one sensor is located at least in part in a sump in the fueling environment.

3. an underground sensing arrangement as set forth in claim 2, wherein said at least one sensor is associated with a level probe inserted into an underground storage tank.

4. An underground sensing arrangement as set forth in claim 2, wherein said at least one sensor comprises a liquid detector.

5. An underground sensing arrangement as set forth in claim 4, wherein the liquid detector is operative to detect the presence of water in the sump.

6. An underground sensing arrangement as set forth in claim 2, wherein the power source comprises a battery device located in the sump.

7. An underground sensing arrangement as set forth in claim 2, wherein the wireless transceiver is mounted to a cover of the sump.

8. An underground sensing arrangement as set forth in claim 1, wherein the wireless transceiver is mounted in a hole defined in the ground surface.

9. An underground sensing arrangement as set forth in claim 1, wherein the wireless transceiver is configured as a Bluetooth transceiver.

10. An underground storage arrangement as set forth in claim 1, wherein the wireless transceiver is configured as a WiFi transceiver.

11. An underground sensing arrangement for use with liquid handling equipment located under a ground surface, said arrangement comprising:
at least one sensor located under the ground surface, said sensor being operative to detect a condition in the liquid handling equipment;
a power supply; and
a wireless transceiver in electrical communication with the at least one sensor and the power supply, the wireless transceiver having:
an environmental housing; and
electrical circuitry contained within the environmental housing, the electrical circuitry including control circuitry, radio circuitry, and an antenna;
wherein the environmental housing is substantially transparent to electromagnetic frequencies at which the wireless transceiver operates, the environmental housing being mounted in a hole defined in the ground surface.

12. An underground sensing arrangement as set forth in claim 12, wherein said at least one sensor is located at least in part in a sump in the fueling environment.

13. An underground sensing arrangement as set forth in claim 12, wherein the power source comprises a battery device located in the sump.

14. An underground sensing arrangement as set forth in claim 11, wherein the wireless transceiver is configured as a Bluetooth transceiver.

15. An underground storage arrangement as set forth in claim 11, wherein the wireless transceiver is configured as a WiFi transceiver.

16. An underground storage arrangement as set forth in claim 11, wherein the wireless transceiver is configured to operate in a low power mode until one of a wake-up command is received or a wake-up time is reached.

17. A method of sensing a condition in a fueling environment using a sensor located under a ground surface, said method comprising steps of:
(a) mounting a battery device under the ground surface;
(b) mounting a wireless transceiver potted substantially flush with the ground surface;
(c) connecting the wireless transceiver so as to be in electrical communication with the sensor and the battery device;
(d) causing the wireless transceiver to operate in a low power mode while awaiting a wake-up commend;
(e) receiving the wake-up command at the wireless transceiver;
(f) in response to the wake-up command, obtain a reading from the sensor; and
(g) transmitting the reading that was obtained from the sensor via the wireless transceiver.

18. A method as set forth in claim 17, wherein the wireless transceiver comprises:
an environmental housing; and
electrical circuitry contained within the environmental housing, the electrical circuitry including control circuitry, radio circuitry, and an antenna;
wherein the environmental housing is substantially transparent to electromagnetic frequencies at which the wireless transceiver operates.

19. A method as set forth in claim 18, wherein the wireless transceiver is configured as a Bluetooth transceiver.

20. A method as set forth in claim 18, wherein the wireless transceiver is configured as a WiFi transceiver.

21. A method of sensing a condition in a fueling environment using a sensor located under a ground surface, said method comprising steps of:
(a) mounting a battery device under the ground surface;
(b) mounting a wireless transceiver potted substantially flush with the ground surface;
(c) connecting the wireless transceiver so as to be in electrical communication with the sensor and the battery device;
(d) causing the wireless transceiver to operate in a low power mode until a wake-up time is reached;
(e) when the wake-up time is reached, obtain a reading from the sensor; and
(f) transmitting the reading that was obtained from the sensor via the wireless transceiver.
